# EUROPEAN PATENT APPLICATION

(11) **EP 2 498 022 A1**
(43) Date of publication of application: **12.09.2012**
(21) Application number: 10828347.4
(22) Date of filing: 05.11.2010
(51) Int. Cl.: F24J 2/38, F24J 2/10, G02B 7/182

(54) **SUNLIGHT COLLECTION SYSTEM, AND METHOD FOR ADJUSTING REFLECTING MIRROR OF SUNLIGHT COLLECTION SYSTEM**

(30) Priority: 06.11.2009 JP 2009254900
(71) Applicant: Mitsubishi Heavy Industries, Ltd., Tokyo 108-8215 (JP)
(72) Inventor: MIZUTA Keiji, Tokyo 108-8215 (JP); OTANI Yuichi, Tokyo 108-8215 (JP); MAEDA Manabu, Tokyo 108-8215 (JP); TAGAWA Masashi, Tokyo 108-8215 (JP); OKUBO Takeshi, Tokyo 108-8215 (JP)
(74) Representative: Bongiovanni, Simone
(86) International application number: PCT/JP2010/069708
(87) International publication number: WO 2011/055788

(57) **Abstract**

The sunlight collection system is provided with a reflecting mirror which is placed on the surface of the ground to reflect sunlight, a light receiving means which is disposed above the surface of the ground and has an incident portion into which the sunlight reflected by the reflecting mirror is made incident, light amount sensors which are mounted at least at two locations facing each other at an outer edge of the incident portion of the light receiving means, a turning mechanism which allows the reflecting mirror to turn around at least one axis, and a direction control unit which obtains light amounts detected respectively by the light amount sensors that face each other, while allowing the reflecting mirror to turn by driving the turning mechanism, thereby adjusting an angle of the reflecting mirror on the basis of the light amounts.

## Description

### Technical Field

The present invention relates to a sunlight collection system which reflects sunlight on a reflecting mirror to collect the sunlight and a method for adjusting the reflecting mirror of the sunlight collection system.
The application concerned claims the right of priority from Patent Application No.2009-254900 filed on November 6, 2009, with the content thereof cited herein.

### Background Art

In recent years, attention has been drawn to a sunlight collection system which collects and utilizes sunlight as clean energy that will not affect the environment. As the above-described system, there has been developed a sunlight collecting and heat receiving system (hereinafter referred to as a solar light heat receiving system) which converts thermal energy obtained by collecting sunlight to electrical energy, to generate power.

In the above-described solar light heat receiving system, available is a tower-type light collecting system which is one type ofsunlight collecting system.
The tower-type light collecting system is provided with a solar light heat receiver disposed above a tower unit which is erected from the ground and a plurality of heliostats (reflecting mirrors) disposed around the tower unit, thereby guiding sunlight reflected by the heliostats into the solar light heat receiver to collect light and heat. Further, a certain type of solar light heat receiver is provided with a casing which is mounted on the tower unit and has an opening portion acting as an incident portion into which sunlight reflected by the heliostats is made incident and a plurality of heat receiving pipes which are disposed along an inner circumferential face of the casing to receive sunlight is made incident into the casing.

In this instance, the sun changes in position with the elapse of time. Thus, in order that sunlight is reflected by reflecting mirrors and made incident into the opening portion of the solar light heat receiver in the tower-type light collecting system, the directions of the reflecting mirrors are to be controlled for operation so as to follow the sun, with the reflecting mirrors being directed at the sun. Therefore, the tower-type light collecting system is provided with a turning mechanism which allows the reflecting mirrors to turn and a control unit which allows the direction of each reflecting mirror to change in accordance with the sun by controlling the turning mechanism. Therefore, the system can at all times follow the sun from sunrise to sunset through all seasons (refer to Patent Document 1, for example).

### Prior Art Documents

### Patent Document

[Patent Document 1] Japanese Published Unexamined Patent Application No. 2008-96066

### Summary of the Invention

### Problem to be Solved by the Invention

However, for example, in equipment disclosed in Patent Document 1, there is found such a case that a reflecting mirror undergoes a directional error with the elapse of time due to inclination of a ground base which supports the reflecting mirror, assembly error, thermal deformation, and soon, and no sunlight is irradiated into an incident portion, even when a control unit is used to adjust the direction of the reflecting mirror in accordance with movement of the sun. In particular, the above-described tower-type light collecting system is long in distance from the reflecting mirror to the incident portion. Therefore, an incident position of sunlight would be greatly deviated in the vicinity of the incident portion even by a slight error.
In order to eliminate deviation of the above-described incident position, it is necessary to adjust regularly the direction of each reflecting mirror in such a manner that sunlight reflected by the reflecting mirror is made incident into the incident portion, with an irradiation position of sunlight confirmed. It is, however, necessary to halt collection of sunlight by reflecting mirrors other than those to be adjusted, while the adjustment is made. In particular, in a system which has several hundreds of reflecting mirrors, such work is needed at each of the reflecting mirrors that adjusts the directions of the reflecting mirrors to be adjusted so that sunlight is made incident into the incident portion in a state that the directions of the reflecting mirrors other than those to be adjusted are kept so as to deviate from the incident portion. The above work lowers the operating rate of the equipment which is operated limitedly only during valuable sunshine hours or entails a great amount of cost.

The present invention has been made in view of the above situation, and an object of the present invention is to provide a sunlight collection system capable of adjusting easily a direction of a reflecting mirror without the necessity for halting operation of the system and a method for adjusting the reflecting mirror of the sunlight collection system.

### Means for Solving the Problem

The sunlight collection system ofthe present invention is provided with a reflecting mirror which is placed on the surface of the ground to reflect sunlight, a light receiving means which is disposed above the surface of the ground and has an incident portion into which the sunlight reflected by the reflecting mirror is made incident, light amount sensors which are mounted at least at two locations facing each other at an outer edge of the incident portion of the light receiving means, a turning mechanism which allows the reflecting mirror to turn around at least one axis, and a direction control unit which obtains light amounts detected respectively by the light amount sensors that face each other, while allowing the reflecting mirror to turn by driving the turning mechanism, thereby adjusting an angle ofthe reflecting mirror on the basis of the light amounts.

The method for adjusting a reflecting mirror of the sunlight collection system of the present invention is a method for adjusting a direction of the reflecting mirror of the sunlight collection system which is provided with a reflecting mirror which is placed on the surface of the ground to reflect sunlight, a light receiving means which is disposed above the surface of the ground and has an incident portion into which the sunlight reflected by the plurality of reflecting mirrors is made incident, and a turning mechanism which allows the reflecting mirror to turn around at least one axis. The method includes a light amount detecting step at which light amounts are detected at detection positions facing each other at the outer edge of the incident portion while turning the reflecting mirror by the turning mechanism, a calculation step which calculates an angle optimal for the reflecting mirror as an adjustment angle on the basis of the light amounts detected by the light amount detecting means, and a direction adjusting step at which an angle of the reflecting mirror is adjusted to the adjustment angle calculated in the calculation step.

According to the present invention, light amounts are detected by turning the reflecting mirror at detection positions of two locations facing each other at the outer edge of the incident portion, thus making it possible to figure out an angle of the reflecting mirror when the sunlight reflected by the reflecting mirror is irradiated at the two locations at the outer edge of the incident portion. Therefore, on the basis of the detected light amounts, there can be determined an angle of the reflecting mirror when the reflected sunlight is irradiated at the center of the incident portion which is an intermediate point of the two locations facing each other at the outer edge of the incident portion. Thereby, the direction of the reflecting mirror can be adjusted by using this angle as an adjustment angle. In this instance, detection of light amount at the outer edge ofthe incident portion is sufficient to such an extent that at least a change in light amount can be figured out when the reflecting mirror is turned. It is, therefore, not necessary to halt the system in operation, and a reflecting mirror to be adjusted can be easily adjusted only by changing the direction thereof in a range where an irradiation position of the reflected sunlight is in the vicinity of the incident portion. Further, the above actions are performed by the direction control unit, by which reflecting mirrors can be sequentially adjusted for the direction, while the system is in operation, without resorting to manpower. This is also efficient.

It is acceptable that the direction control unit of the sunlight collection system of the present invention indicates characteristics of change in light amount with respect to the angle of the reflecting mirror, on the basis of the respective detection results of the light amount sensors which face each other, and characteristic points corresponding to each other are extracted respectively to determine angles of the reflecting mirror at the characteristic points, thereby adjusting the angle of the reflecting mirror to an intermediate value of these angles.

It is acceptable that in the calculation step of the method for adjusting the reflecting mirror of the sunlight collection system of the present invention, on the basis of the respective detection results of the light amount sensors which face each other, characteristics of change in light amount with respect to an angle of the reflecting mirror are indicated, characteristic points corresponding to each other are extracted respectively, thereby angles of the reflecting mirror at the characteristic points are determined, and an intermediate value of these angles is determined as the adjustment angle.

According to the present invention, angles when changes in light amounts detected with respect to the angle of the reflecting mirror are given as characteristic points which indicate the characteristics thereof, that is, when a relative position between the detection positions and the center of a light flux of sunlight reflected by the reflecting mirror assumes a specific positional relationship can be determined for respective detection positions which face each other. Then, the angle of the reflecting mirror is adjusted to an intermediate value of these angles, thus making it possible to keep the center of the light flux of sunlight reflected by the reflecting mirror substantially in alignment with the center of the incident portion.

It is acceptable that the turning mechanism of the sunlight collection system of the present invention is constituted so as to turn freely respectively around a first axis which the turning mechanism can turn in a direction of elevation angle and a second axis which the turning mechanism can turn in a direction of azimuthal angle, and the light amount sensors are provided with a first pair of light amount sensors and a second pair of light amount sensors arrayed in a direction intersecting with a direction at which the first pair of light amount sensors are arrayed, as mutually facing light amount sensors. It is also acceptable that the direction control unit allows the turning mechanism to turn respectively around the first axis and the second axis. by which the reflecting mirror is turned in a first turning direction which corresponds to the direction at which the first pair of light amount sensors are arrayed to adjust an angle in the first turning direction on the basis of detection results by the first pair of light amount sensors, or the direction control unit allows the turning mechanism to turn respectively around the first axis and the second axis, to turn in a second turning direction which corresponds to the direction at which the second pair of light amount sensors are arrayed to adjust an angle in the second turning direction on the basis of detection results by the second pair of light amount sensors.

According to the present invention, the turning mechanism can turn freely respectively around the first axis which the turning mechanism can turn in the direction of elevation angle and around the second axis which the turning mechanism can turn in the direction of azimuthal angle, thus making it possible to adjust a reflecting mirror to any direction, that is, in the direction of elevation angle or the direction of azimuthal angle. Then, the direction control unit allows the reflecting mirror to turn in the first turning direction corresponding to the direction at which the first pair of light amount sensors are arrayed, and the first pair of light amount sensors are used to detect light amounts, thereby making it possible to adjust a direction of the reflecting mirror in such a manner that sunlight reflected by the reflecting mirror is irradiated at an intermediate position between the first light amount sensors along the direction at which the first pair of light amount sensors are arrayed on the basis of the detection results by the first pair of light amount sensors. Similar steps are conducted also for the second pair of light amount sensors, by which the direction of the reflecting mirror can be adjusted in such a manner that sunlight reflected by the reflecting mirror is irradiated at an intermediate position between the second light amount sensors along the direction at which the second pair of light amount sensors are arrayed. Then, the first pair of light amount sensors and the second pair of light amount sensors are installed at the outer edge of the incident portion in such a manner that the respective directions at which they are arrayed are made to intersect with each other, by which adjustment is made respectively by the first pair of light amount sensors and the second pair of light amount sensors. It is, thereby, possible to adjust the direction of the reflecting mirror in such a manner that sunlight reflected by the reflecting mirror is irradiated at the center of the incident portion.

The sunlight collection system of the present invention may be provided with the plurality of reflecting mirrors. It is acceptable that the turning mechanism is constituted so as to turn freely respectively around the first axis which the turning mechanism can turn in the direction of elevation angle and the second axis which the turning mechanism can turn in the direction of azimuthal angle, and the light amount sensors are disposed on an entire circumference along the outer edge of the incident portion.

According to the present invention, the turning mechanism can turn freely respectively around the first axis which the turning mechanism can turn in the direction of elevation angle and the second axis which the turning mechanism can turn in the direction of azimuthal angle, by which the reflecting mirror can be adjusted to any direction, that is, in the direction of elevation angle and the direction of azimuthal angle. Then, the light amount sensors are disposed on the entire circumference along the outer edge of the incident portion. Thereby, even if the plurality of reflecting mirrors are positioned in any directions with respect to the incident portion, it is possible to adjust directions of the reflecting mirrors in such a manner that sunlight reflected by the reflecting mirrors is irradiated at the center of the incident portion under the same conditions on the basis of control by the direction control unit.

It is acceptable that the direction control unit of the sunlight collection system of the present invention is provided with a stationary component removing portion which removes stationary components of light amounts detected by the light amount sensors and outputs the stationary components, thereby adjusting the angle of the reflecting mirror on the basis of the output from the stationary component removing portion.

According to the present invention, the stationary component removing portion of the direction control unit can be used to remove the stationary components detected by the light amount sensors. That is, components irradiated by sunlight diffused and reflected on the surface of the ground and components resulting from sunlight reflected by other reflecting mirrors which are not yet adjusted and, therefore, not irradiated at the incident portion but irradiated at the light amount sensor concerned are removed from light amounts detected by the light amount sensors. Thereby, it is possible to extract accurately only the light amounts resulting from sunlight irradiated by being reflected by reflecting mirrors which are to be adjusted and which are turned by the turning mechanism. As a result, it is possible to adjust more accurately the angles of the reflecting mirrors.

It is acceptable that the direction control unit of the sunlight collection system of the present invention is provided with a band-pass filter which allows only a predetermined frequency component among light amounts detected by the light amount sensors, thereby obtaining the light amounts detected respectively by the light amount sensors while the turning mechanism is used to turn the reflecting mirror at a turning speed which corresponds to a frequency passing through the band-pass filter.

According to the present invention, a relationship between the turning angle of the reflecting mirror and light amounts can be obtained as a waveform of a waveform frequency corresponding to a turning speed. Then, it is possible to obtain only the waveform of the waveform frequency corresponding to the turning speed through the band-pass filter. That is, even if detection by the light amount sensors is subjected to fluctuation due to wind and variation in temperature, the relationship between the turning angle and light amounts is obtained by setting the turning speed so as to give a frequency different from a frequency of the fluctuation. Thereby, the relationship between the turning angle and light amounts is obtained accurately by removing a disturbance resulting from the fluctuation, thus making it possible to adjust the direction of the reflecting mirror.

### Effect of the Invention

According to the present invention, it is possible to easily adjust the direction of the reflecting mirror without halting the sunlight collection system in operation.

### Brief Description of the Drawings

FIG. 1 is a view which shows a power generation system according to a first embodiment of the present invention when viewed from the side thereof.
FIG. 2 is a view of the power generation system in the first embodiment of the present invention when viewed from above.
FIG. 3 is a view which shows in detail the vicinity of an opening portion of a heat receiving apparatus main body of a solar light heat receiver in a sunlight collecting and heat receiving system according to the first embodiment of the present invention.
FIG. 4 is a side view of a heliostat in the sunlight collecting and heat receiving system according to the first embodiment of the present invention.
FIG. 5 is a block diagram which shows the sunlight collecting and heat receiving system according to the first embodiment of the present invention.
FIG. 6 is a view which explains a relationship between a reflecting mirror of the heliostat and the solar light heat receiver in the sunlight collecting and heat receiving system according to the first embodiment of the present invention.
FIG. 7 is a graph which shows a relationship between a direction of the reflecting mirror and light amounts detected by light amount sensors in the sunlight collecting and heat receiving system according to the first embodiment of the present invention.
FIG. 8 is a graph which shows another example of the relationship between the direction of the reflecting mirror and the light amounts detected by the light amount sensors in the sunlight collecting and heat receiving system according to the first embodiment of the present invention.
FIG. 9 is a view which explains one example which specifies characteristic points in the graph shown in FIG. 8.
FIG. 10 is a block diagram which shows a sunlight collecting and heat receiving system of a power generation system according to a second embodiment of the present invention.
FIG. 11 is a view which shows in detail the vicinity of an opening portion of a heat receiving apparatus main body of a solar light heat receiver in the sunlight collecting and heat receiving system of the power generation system according to the second embodiment of the present invention.

### Mode for Carrying Out the Invention

### First embodiment

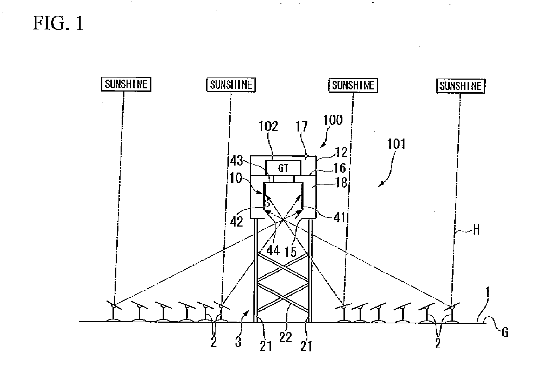

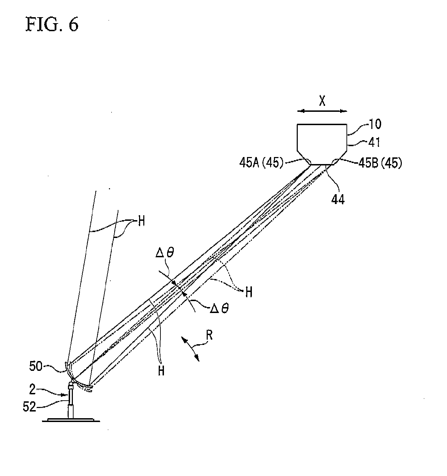

Hereinafter, an explanation is given for the first embodiment of the present invention by referring to FIG. 1 to FIG. 7. In the following, an explanation is given by exemplifying a solar thermal power generation system (hereinafter referred to as a power generation system) in which a sunlight collecting and heat receiving system which collects sunlight and receives heat as the sunlight collection system of the present invention is integrally constituted with a gas turbine unit which generates power by using a heating medium heated by the sunlight collecting and heat receiving system.

### Power generation system

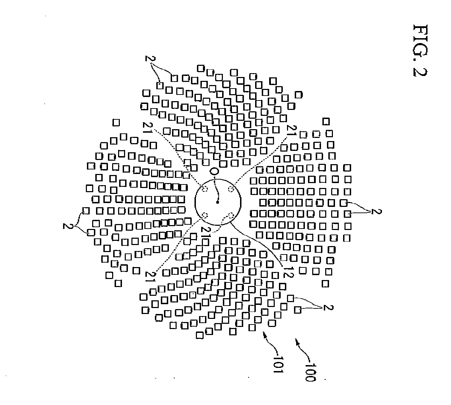

FIG. 1 and FIG. 2 show the power generation system, and FIG. 1 is a side view and FIG. 2 is a plan view. Places on earth appropriate for erecting the power generation system are dry areas in a subtropical high-pressure belt which is closer to a tropic and where direct radiation from the sun is strong and favorable. Therefore, in the power generation system of the present embodiment, an explanation is given in particular for a type of power generation system in which reflecting mirrors are disposed on an entire circumference of the power generation system and which is placed at a lower latitude area in the subtropical high-pressure belt.
In FIG. 1, a power generation system 100 is provided with a solar light heat receiving system 101 which collects sunlight irradiated at a heliostat field 1 placed on a ground G to receive heat and a gas turbine unit 102 which generates power by using a heating medium heated by the heat received from the solar light heat receiving system 101. In this instance, although a detailed explanation will be omitted here, the gas turbine unit 102 is substantially provided with a compressor for compressing a heating medium heated by the solar light heat receiving system 101, a turbine to which the heating medium compressed by the compressor is supplied as a working fluid, a rotor which couples coaxially the compressor with the turbine, and a generator which is connected to the rotor. Then, the rotor is turned by the working fluid supplied to the turbine, the compressor compresses the heating medium, thereby producing the working fluid, and power can be generated by the generator.

### Solar light heat receiving system

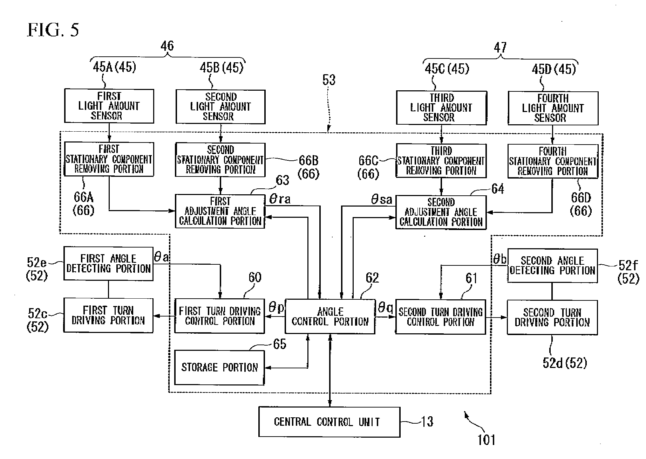

The solar light heat receiving system 101 is provided with a plurality of heliostats 2 which are placed on the heliostat field 1 to reflect sunlight H, a tower unit 3 which is erected on the ground G, a housing 12 which is mounted on the tower unit 3, a solar light heat receiver 10 which is a light receiving means accommodated inside the housing 12 to receive the sunlight H, and a central control unit 13 which controls the heliostats 2 and the solar light heat receiver 10 (FIG 5). In this instance, in the present embodiment, the tower unit 3 is arranged inside the heliostat field 1. That is, the heliostats 2 inside the heliostat field 1 are disposed so as to enclose an entire circumference of the tower unit 3 substantially at 360 degrees (refer to FIG 2).

In the present embodiment, the housing 12 is a closed-end tubular structure which is disposed in a state that an axial direction is in alignment with a perpendicular direction. An opening portion 15 which is opened downward to the ground G is formed at the center in a radial direction of the housing 12 on the lower face thereof, with the upper face closed. Further, inside the housing 12, there is installed a partition wall 16 which partitions an upper part and a lower part in the axial direction. An upper space of the partition wall 16 is a turbine chamber 17 at which the gas turbine unit 102 is disposed, while a lower space of the partition wall 16 is a light collecting chamber 18 at which the solar light heat receiver 10 is disposed.

The tower unit 3 is provided with a plurality of column supports 21 (for example, four column supports) which are erected on the ground G up to the lower face of the housing 12. The column supports 21 are disposed at equal intervals along an outer circumference ofthe lower face of the housing 12 and coupled with the housing 12. As shown in FIG. 2, when viewed from above, no heliostats 2 are arrayed on extension lines of straight lines which connect each of the column supports 21 with the center 0 of the opening portion 44 of the solar light heat receiver 10 to be described later. This is due to the fact that if the column supports 21 are disposed on a light path of sunlight H which is reflected by the heliostats 2 and made incident into the opening portion 44 of the solar light heat receiver 10, the sunlight H is blocked by each of the column supports 21, thus making it difficult to take the sunlight H into the solar light heat receiver 10. Therefore, the heliostats 2 are disposed so as to avoid diagonal lines formed by each of the column supports 21, thereby eliminating the necessity for mounting the heliostats 2 uselessly to reduce equipment costs. The tower unit 3 is also provided with beam portions 22 coupled so as to bridge between the individual column supports 21. The beam portions 22 are not disposed on the light path of the sunlight H which is reflected by the heliostats 2 and made incident into the opening portion 44 of the solar light heat receiver 10. That is, in the present embodiment, the beam portions 22 are coupled between the individual column supports 21 below in the perpendicular direction of the column supports 21.

### Solar light heat receiver

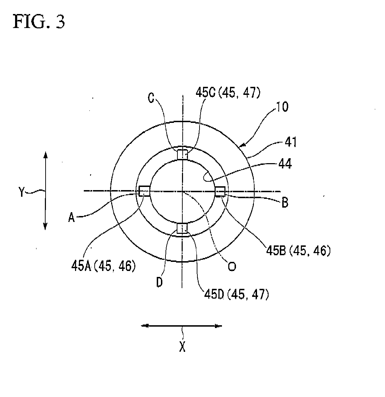

As shown in FIG. 1, the solar light heat receiver 10 is accommodated inside the light collecting chamber 18 of the housing 12 and provided with a heat receiving apparatus main body 41 which acts as a casing and a heat receiving portion 42 which is installed inside the heat receiving apparatus main body 41 to receive heat through irradiation of sunlight H reflected by the heliostats 2. In the present embodiment, the heat receiving apparatus main body 41 is a closed-end tubular structure which is disposed in a state that the axial direction thereof is in alignment with the axial direction of the housing 12. In the heat receiving apparatus main body 41, the upper part thereof is closed by a top panel portion 43, and there is formed at the lower part thereof a substantially circular opening portion 44 which is opened to the ground G and acts as the incident portion into which the sunlight H is made incident. Then, the top panel portion 43 of the heat receiving apparatus main body 41 and the partition wall 16 are accommodated inside the light collecting chamber 18 in a state that the top panel portion 43 and partition wall 16 are hung from the partition wall 16 by supporting members (not illustrated). Further, the heat receiving portion 42 is constituted with many heat receiving pipes (not illustrated) through which a heating medium flows inside, and these heat receiving pipes are arrayed on an inner circumference face of the heat receiving apparatus main body 41. Still further, as shown in FIG. 1 and FIG. 3. there are installed at the outer edge of the opening portion 44 of the heat receiving apparatus main body 41 a first light amount sensor 45A, a second light amount sensor 45B, a third light amount sensor 45C and a fourth light amount sensor 45D, as the light amount sensors 45 for detecting amount of irradiated light. The first to the fourth light amount sensors 45A to 45D are disposed so as to face each other at two locations of detection positions each or a total of four locations respectively from first to fourth detection positions A, B, C, D. The first light amount sensor 45A and the second light amount sensor 45B which face each other constitute a first pair of light amount sensors 46, while the third light amount sensor 45C and the fourth light amount sensor 45C constitute a second pair of light amount sensors 47. Further, light amounts detected by the light amount sensors 45 are output to a direction control unit 53 to be described later.

### Heliostats

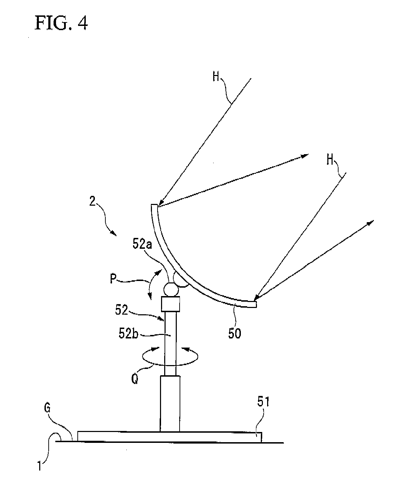

As shown in FIG. 4 and FIG. 5, each of the heliostats 2 is provided with a reflecting mirror 50 which reflects sunlight H, a supporting portion 51 which is fixed to the heliostat field 1, a turning mechanism 52 which is installed at the supporting portion 51 to change a direction of the reflecting mirror 50, and the direction control unit 53 which controls the turning mechanism 52. In the present embodiment, the reflecting mirror 50 is formed in the shape of a recessed face in order to reflect the sunlight H irradiated from the sun and efficiently make the sunlight H incident into the solar light heat receiver 10. However, the reflecting mirror 50 may be formed in the shape of a flat face. The turning mechanism 52 is provided with a first axis 52a which allows the reflecting mirror 50 to turn in a direction of elevation angle P, a second axis 52b which allows the reflecting mirror 50 to turn in a direction of azimuthal angle Q, a first turn driving portion 52c which allows the first axis 52a to turn, a second turn driving portion 52d which allows the second axis 52b to turn, a first angle detecting portion 52a which detects a turning angle of the first axis 52a, and a second angle detecting portion 52f which detects a turning angle of the second axis 52b. The first turn driving portion 52c and the second turn driving portion 52d are, for example, a motor, and the first angle detecting portion 52e and the second angle detecting portion 52f are, for example, an encoder. The turning angle around the first axis 52a detected by the first angle detecting portion 52e is referred to as a first axis turning angle θp, while the turning angle around the second axis 52b detected by the second angle detecting portion 52f is referred to as a second axis turning angle θq.

Further, where the first axis 52a and the second axis 52b are allowed to turn, thereby turning the reflecting mirror 50, a turning direction of the reflecting mirror 50 at a time when sunlight H reflected by the reflecting mirror 50 and irradiated at the opening portion 44 or in the vicinity thereof moves along a direction X at which the first pair of light amount sensors 46 (the first light amount sensor 45A and the second light amount sensor 45B) are arrayed is referred to as a first turning direction R, and a turning angle of the reflecting mirror 50 along the first turning direction R is referred to as a first turning direction angle θr. Similarly, when the first axis 52a and the second axis 52b are allowed to turn and the reflecting mirror 50 is allowed to turn, a turning direction of the reflecting mirror 50 at a time when sunlight H which is reflected by the reflecting mirror 50 and which is irradiated at the opening portion 44 or in the vicinity thereof moves along a direction Y at which the second pair of light amount sensors 47 (the third light amount sensor 45C and the fourth light amount sensor 45D) are arrayed is referred to as a second turning direction S, and a turning angle of the reflecting mirror 50 along the second turning direction S is referred to as a second turning direction angle θs. The first turning direction R and the second turning direction S are different for each of the heliostats 2 depending on a relative position of each of the heliostats 2 with the opening portion 44 of the heat receiving apparatus main body 41. There is a case where the first turning direction R is in alignment with one of the direction of elevation angle P and the direction of azimuthal angle Q and the second turning direction S is in alignment with the other thereof.

As shown in FIG. 5, the direction control unit 53 is provided with a first turn driving control portion 60 which controls the first turn driving portion 52c, a second turn driving control portion 61 which controls the second turn driving portion 52d, an angle control portion 62 which sends an angle instruction value to the first turn driving control portion 60 and the second turn driving control portion 61, a first adjustment angle calculation portion 63, a second adjustment angle calculation portion 64, and a storage portion 65 which stores correlation data which correlates the position of the sun with the direction of the reflecting mirror 50. Upon input of detection results by the first light amount sensor 45A and the second light amount sensor 45B which constitute the first pair of light amount sensors 46, the first adjustment angle calculation portion 63 calculates a first adjustment angle θra which is an angle to be corrected as the first turning direction angle θr of the reflecting mirror 50 on the basis of the detection results. Further, upon input of detection results by the third light amount sensor 45C and the fourth light amount sensor 45D which constitute the second pair of light amount sensors 47, the second adjustment angle calculation portion 64 calculates a second adjustment angle θsa which is an angle to be corrected as the second turning direction angle θs of the reflecting mirror 50 on the basis of the detection results.

In this instance, the direction control unit 53 is provided with, as stationary component removing portions 66, a first stationary component removing portion 66A, a second stationary component removing portion 66B, a third stationary component removing portion 66C and a fourth stationary component removing portion 66D. These first to fourth stationary component removing portions 66A to 66D correspond respectively to the first to the fourth light amount sensors 45A to 45D. Data on light amounts input from the first to the fourth light amount sensors 45A to 45D from which stationary components have been removed are output accordingly to the first adjustment angle calculation portion 63 or the second adjustment angle calculation portion 64. The first to the fourth stationary component removing portions 66A to 66D can be constituted with high-pass filters, for example.

Further, there is input to the angle control portion 62 from the central control unit 13 one of a light collecting instruction by which sunlight H is reflected by the reflecting mirror 50 and irradiated at the opening portion 44 of the solar light heat receiver 10 and an adjustment instruction which adjusts a direction of the reflecting mirror 50. Then, where the light collecting instruction is input to the angle control portion 62, the direction control unit 53 operates the control of changing the direction of the reflecting mirror 50 in such a manner that the sunlight H is irradiated at the opening portion 44 of the solar light heat receiver 10, as a light collecting mode, depending on a position of the sun which changes every second. On the other hand, where the adjustment instruction is input to the angle control portion 62, the direction control unit 53 adjusts the direction of the reflecting mirror 50, as an adjustment mode, by allowing the reflecting mirror 50 to turn sequentially in the first turning direction R and the second turning direction S at a predetermined angle range.
Hereinafter, an explanation is given in detail for control in each of the modes.

First, an explanation is given for the light collecting mode. In the light collecting mode, position information on the sun which indicates a position of the sun that changes every second is input from the central control unit 13. Then, the angle control portion 62 calculates the first axis turning angle θp and the second axis turning angle θq at which the sunlight H irradiated from the sun at a current position of the sun is reflected and irradiated at the center of the opening portion 44 on the basis of the correlation data which correlates the position of the sun with the direction of the reflecting mirror 50 by referring to the storage portion 65, thereby outputting corresponding angle instruction values to the first turn driving control portion 60 and the second turn driving control portion 61. The first turn driving control portion 60 and the second turn driving control portion 61 control respectively the first turn driving portion 52c and the second turn driving portion 52d, thereby allowing the first axis 52a and the second axis 52b to turn so as to give the respectively input angle instruction values (the first axis turning angle θp and the second axis turning angle θq). In this instance, angle detection values detected by the first angle detecting portion 52e and the second angle detecting portion 52f are input to the respectively corresponding first turn driving control portion 60 and the second turn driving control portion 61. The first turn driving control portion 60 and the second turn driving control portion 61 conduct feedback control on the basis ofthe respectively input angle detection values. Therefore, the direction control unit 53 can adjust the direction of the reflecting mirror 50 in such a manner that the sunlight H which is reflected is irradiated at the center of the opening portion 44 by controlling the first turn driving portion 52c and the second turn driving portion 52d, depending on a position of the sun which changes every second.

Next, an explanation is given for the control in the adjustment mode.
The central control unit 13 makes a regular adjustment for the direction of each reflecting mirror 50 in each of the heliostats 2. That is, the central control unit 13 outputs in turn an adjustment instruction to the angle control portion 62 of each of the heliostats 2 on a predetermined day once every month, for example. Then, the angle control portion 62 of each of the heliostats 2 which has received the adjustment instruction switches a control mode from the light collecting mode to the adjustment mode.
In the adjustment mode, the direction control unit 53 First carries out a light amount detecting step. That is, the angle control portion 62 allows the reflecting mirror 50 to turn to both sides of the first turning direction R at a predetermined angle range Δθ from a current direction of the reflecting mirror 50. The angle range Δθ is such a range that the reflecting mirror 50 which is now supposed to irradiate sunlight H at the center of the opening portion 44 of the solar light heat receiver 10 is allowed to turn as described above, by which the irradiation position is outside the first light amount sensor 45A and the second light amount sensor 45B. In detail, the angle control portion 62 converts the first turning direction angle θr to the first axis turning angle θp and the second axis turning angle θq, thereby outputting them respectively to the first turn driving control portion 60 and the second turn driving control portion 61. Thus, the first turn driving portion 52c and the second turn driving portion 52d allow the first axis 52a and the second axis 52b to turn, by which the reflecting mirror 50 turns in the first turning direction R. Further, at this time, the angle control portion 62 outputs sequentially a current first turning direction angle θr to the first adjustment angle calculation portion 63.

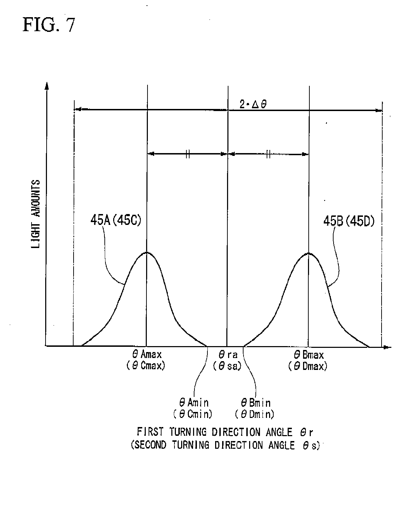

Then, the direction control unit 53 carries out the calculation step. That is, at the direction control unit 53. the first adjustment angle calculation portion 63 correlates the first turning direction angle θr input sequentially with light amounts input from the first light amount sensor 45A and the second light amount sensor 45B. FIG. 7 shows a relationship between the first turning direction angle θr and the light amount input from the first light amount sensor 45A and the second light amount sensor 45B. The sunlight H reflected by the reflecting mirror 50 and then irradiated is all made incident thereinto from the opening portion 44 which is an incident portion, where the center of the light flux thereof is in alignment with the center of the opening portion 44 of the solar light heat receiver 10. Thereby, light amounts detected by the first light amount sensor 45A and the second light amount sensor 45B installed at the outer edge of the opening portion 44 are zero. On the other hand, the light amount detected by the first light amount sensor 45A are increased as the irradiation position moves closer to the first light amount sensor 45A due to turn of the reflecting mirror 50. The light amount are increased to a maximum extent when the center of the light flux is in alignment with the center of the first light amount sensor 45A and, then, the detected light amounts are gradually decreased. This is also similar to the second light amount sensor 45B. In principle, sunlight H which has been diffused and reflected on the surface of the ground and others is constantly irradiated at each of the light amount sensors 45, and where any of the reflecting mirrors 50 which are not to be adjusted is deviated in direction, the sunlight H reflected by the reflecting mirror 50 is constantly irradiated and detected as a stationary component. However, the stationary component is removed by the first stationary component removing portion 66A and the second stationary component removing portion 66B. Therefore, in FIG 7, the first light amount sensor 45A and the second light amount sensor 45B detect no light amounts at the center and both ends of the opening portion 44 where the sunlight H reflected by the reflecting mirror 50 to be adjusted is not irradiated.

Then, at the first adjustment angle calculation portion 63, on the basis of the relationship of the thus obtained first turning direction angle θr with the light amounts input from the first light amount sensor 45A and the second light amount sensor 45B, there are extracted θAmax and θBmax which are characteristic points indicating characteristics of the change and corresponding to each other and which are angles at a time when the light amounts detected respectively by the first light amount sensor 45A and the second light amount sensor 45B become maximum. Then, the first adjustment angle calculation portion 63 averages the extracted two angles to determine an intermediate value of the angles as a first adjustment angle θra. That is, the first adjustment angle calculation portion 63 can determine, as the first adjustment angle θra, an angle at which sunlight is irradiated to an intermediate point between the first light amount sensor 45A and the second light amount sensor 45B which constitute the first pair of light amount sensors 46 along the direction X at which they are arrayed. Then, the first adjustment angle calculation portion 63 outputs the thus determined first adjustment angle θra to the angle control portion 62.

Then, the direction control unit 53 carries out the light amount detecting step and the calculation step by using the second pair of light amount sensors 47 in a similar manner as described above. That is, the angle control portion 62 of the direction control unit 53 allows the reflecting mirror 50 to turn in the second turning direction S at a predetermined angle range Δθ to the both sides of the second turning direction S from a current direction of the reflecting mirror 50. In detail, the angle control portion 62 converts the second turning direction angle θs to the first axis turning angle θp and the second axis turning angle θq, thereby outputting them respectively to the first turn driving control portion 60 and the second turn driving control portion 61.
The first turn driving portion 52c and the second turn driving portion 52d allow the first axis 52a and the second axis 52b to turn, by which the reflecting mirror 50 turns in the second turning direction S. At this time, the angle control portion 62 outputs a current second turning direction angle θs sequentially to the second adjustment angle calculation portion 64.

Then, in the second adjustment angle calculation portion 64 as well, on the basis of data on light amounts input from the third light amount sensor 45C and the fourth light amount sensor 45D by way of the third stationary component removing portion 66C and the fourth stationary component removing portion 66D, the relationship shown in FIG. 7 is given to extract θCmax and θDmax which are characteristic points indicating characteristics of the change and corresponding to each other and which are angles at a time when the light amounts respectively detected by the third light amount sensor 45C and the fourth light amount sensor 45D are maximized. Then, the second adjustment angle calculation portion 64 averages the thus extracted angles θCmax and θDmax to determine an intermediate value of the angles as a second adjustment angle θsa. That is, the second adjustment angle calculation portion 64 can determine, as the second adjustment angle θsa, an angle which irradiates an intermediate position between the third light amount sensor 45C and the fourth light amount sensor 45D which constitute the second pair of light amount sensors 47 along the direction Y at which they are arranged. Then, the second adjustment angle calculation portion 64 outputs the thus determined second adjustment angle θsa to the angle control portion 62.

Next, the direction control unit 53 carries out the direction adjusting step. That is, in the angle control portion 62, the first adjustment angle θra and the second adjustment angle θsa input from the first adjustment angle calculation portion 63 and the second adjustment angle calculation portion 64 are converted to the first axis turning angle θp and the second axis turning angle θq. Thereby, a difference from an angle before the adjustment mode is given as a compensation amount to compensate for the correlation data on the position of the sun and the direction of the reflecting mirror 50 stored at the storage portion 65. In this instance, the first pair of light amount sensors 46 and the second pair of light amount sensors 47 used in determining the first adjustment angle θra and the second adjustment angle θsa are installed at the outer edge of the opening portion 44 which is an incident portion in such a manner that the respective directions X and Y at which they are arrayed are made to intersect with each other. Therefore, adjustment is made respectively by the first pair of light amount sensors 46 and the second pair of light amount sensors 47 under the control of the angle control portion 62, by which the direction of the reflecting mirror 50 can be adjusted so that sunlight H reflected by the reflecting mirror 50 is irradiated at the center of the opening portion 44.

In this instance, light amounts at the outer edge of the opening portion 44 of the solar light heat receiver 10 are detected for adjusting the direction of the reflecting mirror 50, thus making it is possible to determine an angle of the reflecting mirror 50 at a time when the light amounts are maximum, only if a change in light amounts in association with turn of the reflecting mirror 50 is at least found. Therefore, in the adjustment mode, it is possible to adjust easily the direction of the reflecting mirror 50, without any necessity for halting the system in operation, only by changing the direction of the reflecting mirror 50 in a range that an irradiation position of sunlight H reflected by the reflecting mirror 50 concerned is in the vicinity of the opening portion 44. As a result, each of the reflecting mirrors 50 can be adjusted sequentially for the direction without using manpower, while the system is in operation, and this is efficient.

Further, in the solar light heat receiving system 101 of the present embodiment, the direction control unit 53 is provided with the stationary component removing portion 66 and can remove the stationary components of light amounts input from each of the light amount sensors 45. Therefore, only the light amounts resulting from sunlight H reflected and irradiated by a reflecting mirror 50 which is to be adjusted and turned by the turning mechanism 52 can be extracted accurately by each of the light amount sensors 45. The reflecting mirror 50 can be thereby more accurately adjusted for the angle.

In the above-described calculation step, points at which the respective light amounts detected by two light amount sensors 45 become maximum are extracted, as characteristic points which indicate characteristics of the change in each of the light amount sensors 45 with respect to the angle of the reflecting mirror 50, to determine angles at these points, thereby giving an intermediate value of the angles as an adjustment angle. However, the present invention shall not be restricted thereto.
For example, points at which the respective light amount detected by two light amount sensors 45 become minimum, that is, angles at which zero is obtained (for example, as shown in FIG. 7, angle θ A min (θ C min), θ B min (θ D min)) are determined as the characteristic point, and an intermediate value of the angles is given as an adjustment angle, by which an equivalent value can be determined as the adjustment angle. Where the stationary component removing portion 66 is not constitutionally provided, stationary components exist as light amounts to be detected. However, in this instance as well, it is possible to specify a position at which light amounts become minimum by referring to a position at which a change rate of light amount is zero.

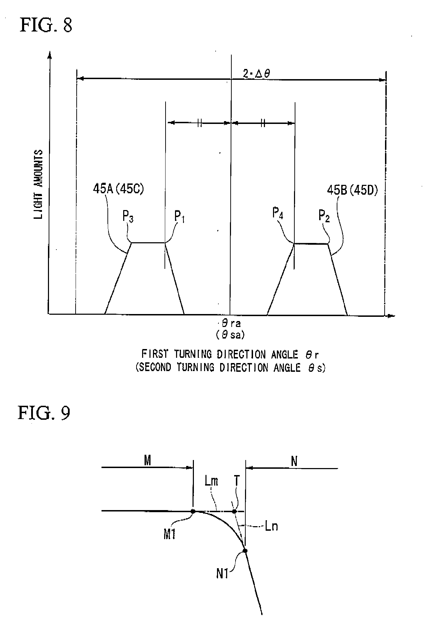

Further, as shown in FIG. 8, where light amounts with respect to the angle of the reflecting mirror 50 are changed in a trapezoidal shape, change points P 1, P 2 at which the light amounts change from a constant state to a decreasing state or change points P 3, P 4 at which the light amount change from an increasing state to a constant state, that is, positions of shoulders in a change-indicating waveform may be given as characteristic points. In this instance, regarding mutually corresponding characteristic points, as one of them, selected is a change point at which the light amounts change from a constant state to a decreasing state, for example, the change point P 1 and, as the other thereof, selected is a change point at which the light amounts change from an increasing state to a constant state, such as, for example, the change point P4. Then, an intermediate value of angles at the two change points P 1, P 4 may be given the adjustment angle.

Still further, where the light amounts with respect to the angle of the reflecting mirror 50 are changed in a trapezoidal shape and where, as shown in FIG. 9. no clear knee point is formed at a change point, the change point can be specified by various methods. For example, a range M at which light amounts are substantially constant and a range N at which light amounts are increased or decreased at a substantially constant change rate are extracted, by which the change point can be specified as an intersecting point T of the respective approximate straight lines Lm and Ln of the ranges M, N. Alternatively, points M1, N1 at which a change rate of light amounts is changed on the side where light amounts are substantially constant and on the side where light amounts are increased or decreased are extracted, by which a characteristic point may be specified as any point or the characteristic point may be specified as an intermediate position between the points M1 and N1.

Further, in the direction control unit 53, the angle control portion 62 can instruct a turning angle respectively to the first turn driving control portion 60 and the second turn driving control portion 61. The angle control portion 62 may instruct a turning speed in addition to the turning angle. Thereby, the relationship between the turning angle and light amounts in FIG. 7 and that in FIG. 8 can be obtained as a waveform of frequency corresponding to the turning speed. Then, a band-pass filter corresponding to the frequency concerned is installed between the first adjustment angle calculation portion 63 and the second adjustment angle calculation portion 64 corresponding to the respective light amount sensors 45 in the direction control unit 53, thus making it possible to obtain only a waveform of the frequency corresponding to the turning speed. That is, even if detection by the light amount sensors is subjected to fluctuation due to wind and variation in temperature, the relationship between the turning angle and light amounts is obtained by setting the turning speed so as to give a frequency different from a frequency of the fluctuation. Thereby, the relationship between the turning angle and light amount is accurately obtained by removing a disturbance resulting from the fluctuation, thus making it possible to adjust the direction of the reflecting mirror.

### Second embodiment

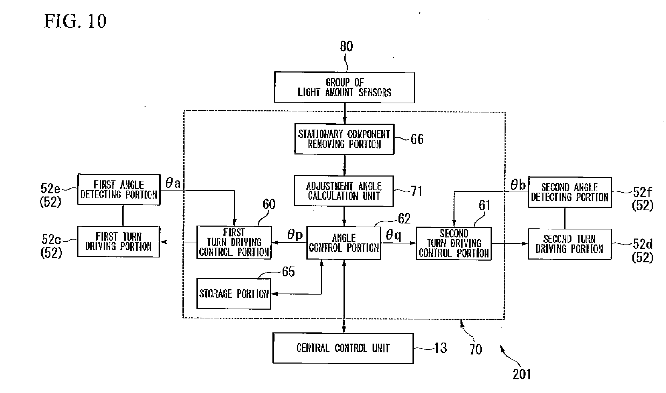

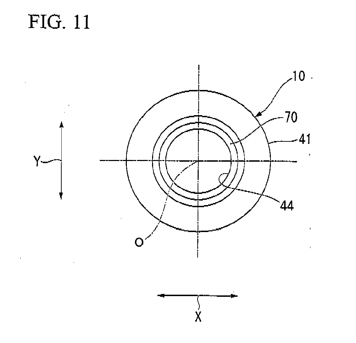

Next, an explanation is given for the second embodiment of the present invention. The second embodiment of the present invention is shown in FIG. 10 and FIG. 11. In the present embodiment, members common to the previously described embodiment are given the same reference numerals, and an explanation thereof is omitted here.

As shown in FIG. 10 and FIG. 11, at a direction control unit 70 of a solar light heat receiving system 201 in the power generation system of the present embodiment, light amount sensors are annularly arrayed at the outer edge of an opening portion 44 of a solar light heat receiver 10 as a group of light amount sensors 80. Then, light amounts detected by the group of light amount sensors 80 are input by way of a stationary component removing portion 66 into an adjustment angle calculation unit 71 at the direction control unit 70. The present embodiment is similar to the first embodiment in other constitutions.

In the solar light heat receiving system 201 of the present embodiment, the light amount sensors are annularly arrayed at the outer edge of the opening portion 44 of the solar light heat receiver 10. Therefore, in a light amount detecting step, even where a relative position of the solar light heat receiver 10 with a reflecting mirror 50 is located anywhere, only one of a first axis 52a and a second axis 52b is turned, thereby the reflecting mirror 50 is turned to one side, by which light amounts can be detected by any of the light amount sensors which are arrayed annularly. In addition, only the other of them is turned, thereby the reflecting mirror 50 is turned to the other side, by which light amount can be detected by any of the light amount sensors which are arrayed annularly. That is, at any of the reflecting mirrors 50, the first axis 52a and the second axis 52b are independently turned respectively in a direction of elevation angle P and in a direction of azimuthal angle Q, thus making it possible to adjust the direction of each of the reflecting mirrors 50 by simpler procedures and calculation.

An explanation has been so far given in detail for the embodiments of the present invention by referring to the drawings. Specific constitutions shall not be restricted to those of the embodiments, and any change in design and others which do not depart from the gist of the present invention will be included in the present invention.

In the above-described embodiments, an explanation has been given for the solar light heat receiving system which collects sunlight and receives heat in the power generation system. The present invention is not restricted thereto but applicable to any sunlight collection system in which at least sunlight is collected at a certain incident portion. That is, for example, where a solar cell is installed in a predetermined range as an incident portion and reflecting mirrors are used to collect sunlight at the solar cell, it is possible to make a similar adjustment by disposing light amount sensors at the outer edge of the solar cell.

### Description of Reference Numerals

10: solar light heat receiver (light receiving means)
44: opening portion (incident portion)
45: light amount sensor
46: first pair of light amount sensors
47: second pair of light amount sensors
50: reflecting mirror
52: turning mechanism
53, 70: direction control unit
66: stationary component removing portion
80: group of light amount sensors
H: sunlight
P: direction of elevation angle
Q: direction of azimuthal angle
R: first turning direction
101, 201: solar light heat receiving system (sunlight collection system)

## Claims

1. A sunlight collection system comprising:
a reflecting mirror which is placed on the surface of the ground to reflect sunlight;
a light receiving means which is disposed above the surface of the ground and has an incident portion into which the sunlight reflected by the reflecting mirror is made incident;
light amount sensors which are mounted at least at two locations facing each other at an outer edge of the incident portion of the light receiving means;
a turning mechanism which allows the reflecting mirror to turn around at least one axis; and
a direction control unit which obtains light amounts detected respectively by the light amount sensors that face each other, while allowing the reflecting mirror to turn by driving the turning mechanism, thereby adjusting an angle of the reflecting mirror on the basis of the light amounts.

2. The sunlight collection system according to Claim 1, wherein,
the direction control unit indicates characteristics of change in light amounts with respect to the angle of the reflecting mirror, on the basis of the respective detection results of the light amount sensors which face each other, and extracts respectively characteristic points corresponding to each other to determine angles of the reflecting mirror at the characteristic points, thereby adjusting the angle of the reflecting mirror to an intermediate value of these angles.

3. The sunlight collection system according to Claim 1 or Claim 2, wherein
the turning mechanism is constituted so as to turn freely respectively around a first axis which the turning mechanism can turn in a direction of elevation angle and a second axis which the turning mechanism can turn in a direction of azimuthal angle,
the light amount sensors are provided with a first pair of light amount sensors and a second pair of light amount sensors which are arrayed in a direction intersecting with a direction at which the first pair of light amount sensors are arrayed, as mutually facing light amount sensors.
the direction control unit allows the turning mechanism to turn respectively around the first axis and the second axis, by which the reflecting mirror is turned in a first turning direction which corresponds to the direction at which the first pair of light amount sensors are arrayed to adjust an angle in the first turning direction on the basis of detection results by the first pair oflight amount sensors, and the direction control unit allows the turning mechanism to turn respectively around the first axis and the second axis, by which turn is made in a second turning direction which corresponds to the direction at which the second pair of light amount sensors are arrayed to adjust an angle in the second turning direction on the basis of detection results by the second pair of light amount sensors.

4. The sunlight collection system according to Claim 1 or Claim 2 which is provided with the plurality of reflecting mirrors, wherein
the turning mechanism is constituted so as to turn freely respectively around the first axis which the turning mechanism can turn in the direction of elevation angle and the second axis which the turning mechanism can turn in the direction of azimuthal angle, and
the light amount sensors are disposed on an entire circumference along the outer edge of the incident portion.

5. The sunlight collection system according to any one of Claim 1 to Claim 4, wherein
the direction control unit is provided with a stationary component removing portion which removes stationary components of light amounts detected by the light amount sensors and outputs the stationary components, thereby adjusting the angle of the reflecting mirror on the basis of the output from the stationary component removing portion.

6. The sunlight collection system according to any one of Claim 1 to Claim 5, wherein
the direction control unit is provided with a band-pass filter which allows only a predetermined frequency component among light amounts detected by the light amount sensors, thereby obtaining the light amounts detected respectively by the light amount sensors while the turning mechanism is used to turn the reflecting mirror at a turning speed which corresponds to a frequency passing through the band-pass filter.

7. A method for adjusting a direction of the reflecting mirror of the sunlight collection system comprising: a reflecting mirror which is placed on the surface of the ground to reflect sunlight; a light receiving means which is disposed above the surface of the ground and has an incident portion into which the sunlight reflected by the reflecting mirror is made incident; and a turning mechanism which allows the reflecting mirror to turn around at least one axis, and
the method includes a light amount detecting step at which light amounts are detected at detection positions facing each other at the outer edge of the incident portion, while turning the reflecting mirror by the turning mechanism,
a calculation step which calculates an angle optimal for the reflecting mirror as an adjustment angle on the basis of light amounts detected by the light amount detecting means, and
a direction adjusting step at which an angle of the reflecting mirror is adjusted to the adjustment angle calculated in the calculation step.

8. The method for adjusting the reflecting mirror of the sunlight collection system according to Claim 7, wherein
in the calculation step, on the basis of the respective detection results of the light amount sensors which face each other, characteristics of change in light amounts detected with respect to an angle of the reflecting mirror are indicated, characteristic points corresponding to each other are extracted respectively, thereby angles of the reflecting mirror at the characteristic points are determined, and an intermediate value of these angles is determined as the adjustment angle.
